# EUROPÄISCHE PATENTSCHRIFT

(11) **EP 0 960 388 B1**
(45) Veröffentlichungstag und Bekanntmachung des Hinweises auf die Patenterteilung: **09.01.2002**
(21) Anmeldenummer: 98907854.8
(22) Anmeldetag: 23.01.1998
(51) Int. Cl.: G06T 9/00

(54) **VERFAHREN UND ANORDNUNG ZUR CODIERUNG EINES DIGITALISIERTEN BILDES**
METHOD AND DEVICE FOR ENCODING A DIGITALIZED PICTURE
PROCEDE ET DISPOSITIF DE CODIFICATION D'UNE IMAGE NUMERISEE

(30) Priorität: 11.02.1997 DE 19705176
(43) Veröffentlichungstag der Anmeldung: 01.12.1999
(73) Patentinhaber: SIEMENS AKTIENGESELLSCHAFT, 80333 München (DE)
(72) Erfinder: RIEGEL, Thomas, D-81739 München (DE)
(86) Internationale Anmeldenummer: DE9800208
(87) Internationale Veröffentlichungsnummer: WO9835319

(56) Entgegenhaltungen:
- RIEGEL T B ET AL: "Shape initialization of 3D objects in videoconference scenes" STEREOSCOPIC DISPLAYS AND VIRTUAL REALITY SYSTEMS IV, SAN JOSE, CA, USA, 11-14 FEB. 1997, Bd. 3012, ISSN 0277-786X, PROCEEDINGS OF THE SPIE - THE INTERNATIONAL SOCIETY FOR OPTICAL ENGINEERING, 1997, SPIE-INT. SOC. OPT. ENG, USA, Seiten 116-124, XP002072067
- MALASSIOTIS S ET AL: "CODING OF VIDEO-CONFERENCE STEREO IMAGE SEQUENCES USING 3D MODELS" SIGNAL PROCESSING. IMAGE COMMUNICATION, Bd. 9, Nr. 2, Januar 1997, Seiten 125-135, XP000638966
- GRAMMALIDIS N ET AL: "STEREO IMAGE SEQUENCE CODING BASED ON THREE-DIMENSIONAL MOTION ESTIMATION AND COMPENSATION" SIGNAL PROCESSING. IMAGE COMMUNICATION, Bd. 7, Nr. 2, August 1995, Seiten 129-145, XP000517132
- P.Rosin, G.West: "Nonparametric Segmentation of Curves into Various Representations", IEEE Trans. on Pattern Analysis and Machine Intelligence, Bd. 17, Nr. 12, S. 1140-153, Dezember 1995

## Beschreibung

### Technischer Hintergrund

Modellbasierte Bildcodierverfahren mit 3-D-Modellen erfordern eine Modellierung des Szeneninhalts in Form vom computergraphischen Modellen. Zur Gewinnung der dazu notwendigen Tiefeninformation gibt es verschiedene Möglichkeiten, beispielsweise die Disparitäts-/Tiefenschätzung aus verschiedenen Kameraansichten.

Ein wesentlicher Aspekt bei modellbasierten Codierverfahren ist die Beschreibung dieser Tiefendaten in einer geeigneten Form, üblicherweise als Dreiecknetze (Wireframes), zur späteren Visualisierung mittels Computergraphik.

Aus [1] sind verschiedene Verfahren zur Ermittlung von Tiefeninformation für eine von einer Kamera aufgenommenen Szene bekannt.

Aus [2] ist ein Konturverfolgungsverfahren bekannt. Unter einem Konturverfolgungsverfahren ist ein Verfahren zu verstehen, mit dem die Kante eines Bildobjekts, d.h. die Kontur des Bildobjekts, ermittelt wird.

Aus [3] ist die Ermittlung von Krümmungswerten für ein Bildsignal, d.h. die zweite örtliche Differentiation der Codierungsinformation, bekannt.

Unter Codierungsinformation ist in diesem Zusammenhang beispielsweise Helligkeitsinformation (Luminanzwerte) und/oder Farbinformation (Chrominanzwerte) zu verstehen, die jeweils eindeutig den Bildpunkten eines digitalisierten Bildes zugeordnet sind.

Aus [4] ist ein Verfahren bekannt, um ein 2-dimensionales Bild, welches durch einen Polygonzug begrenzt wird, mit einer Vielzahl von Dreiecken, die im weiteren als Dreiecksnetz bezeichnet werden, aufzufüllen. Dabei ist bekannt, daß die Bestimmung der Dreiecke, die verwendet werden, um die durch das Polygon begrenzte Fläche auszufüllen, derart gebildet werden, daß für jedes einzelne generierte Dreieck bestimmte Qualitätskriterien erfüllt werden müssen. So ist es beispielsweise aus diesem Dokument bekannt, als Qualitätskriterium eine max. Flächenangabe zu verwenden, die ein Dreieck nicht überschreiten darf. Ein weiteres bekanntes Qualitätskriterium ist, daß jeder Innenwinkel des jeweils generierten Dreiecks mindestens 20° aufweist. Auf diese Weise wird garantiert, daß der in [4] beschriebene Algorithmus terminiert.

Aus [12] ist bekannt, im Rahmen einer objekt-basierten Bildcodierung eine Oberfläche eines dreidimensionalen Objekts auf eine zweidimensionale Gitterstruktur, welche aus Dreiecken aufgebaut ist, abzubilden.

In [5] sind verschiedene 3-D-Kantenfilter für die digitale Bildverarbeitung beschrieben.

Aus [6], [10], [11] sind verschiedene Algorithmen, die zur Approximation von dichten Tiefendaten durch Dreiecksnetze eingesetzt werden, bekannt. Die Approximation von dichten Tiefendaten durch Dreiecksnetze wird im weiteren als Triangulierung bezeichnet.

Aus [8] ist ein Texture-Mapping-Verfahren bekannt, bei dem für ein Bildobjekt dessen Kontur ermittelt wird. Um eine Darstellung des Bildobjekts aus verschiedenen Ansichten zu ermöglichen, wird bei der Bildung von Polygonen Tiefeninformation von Bildpunkten des Bildobjekts berücksichtigt. Die Poygone werden zur Codierung des Bildobjekts eingesetzt.

Aus [9] ist es bekannt, bei der Bildung eines Polygons in einem 3-dimensionalen Bildobjekt Stützstellen des Polygons derart zu bestimmen, daß ein Polygon, dessen Stützstellen näherungsweise in einer durch das Bildobjekt vorgegebene Oberflächenebene liegen, derart behandelt wird, als ob die Stützstellen tatsächlich in der Oberflächenebene liegen.

Als Optimierungskriterium steht bei diesen bekannten Verfahren die räumliche Genauigkeit der Approximation im Vordergrund. Diese Verfahren erzeugen Dreiecksnetze mit sehr vielen kleinen und/oder auch äußerst spitzen Dreiecken. Diese Dreiecksform, die durch die bekannten Verfahren generiert werden, eignet sich jedoch schlecht für sog. Texture-Mapping-Verfahren in der Computergraphik. Somit ist eine computergraphische Visualisierung mittels Texture-Mapping-Verfahren mit den bekannten Verfahren nur mit relativ geringer Qualität möglich.

### 3. Kurzbeschreibung der Erfindung

Der Erfindung liegt das Problem zugrunde, ein Verfahren und eine Anordnung zur Durchführung des Verfahrens zur Bildcodierung anzugeben, bei dem eine computergraphische Visualisierung mittels Texture-Mapping-Verfahren mit gegenüber bekannten Verfahren verbesserter Qualität erreicht wird.

Das Problem wird durch das Verfahren gemäß Patentanspruch 1 sowie durch die Anordnung gemäß Patentanspruch 13 gelöst.

Bei dem Verfahren gemäß Patentanspruch 1 zur Codierung eines digitalisierten Bildes mit einem Bildobjekt mit einer beliebigen Anzahl von Bildpunkten werden folgende Verfahrensschritte durchgeführt. Für das in dem Bild enthaltene Bildobjekt wird die Kontur des Bildobjekts ermittelt. Ferner werden in einem weiteren Schritt Stützstellen bestimmt, die auf der Kontur liegen. Bei der Bestimmung der Stützstellen wird Tiefeninformation von Bildpunkten des Bildes berücksichtigt. Unter Berücksichtigung der Stützstellen werden Polygone gebildet, mit denen die mit der Kontur berandete Fläche zumindest näherungsweise ausgefüllt wird. Unter Verwendung der Polygone wird schließlich das Bildobjekt codiert.

Ein erheblilcher Vorteil des Verfahrens ist darin zu sehen, daß durch Berücksichtigung der Tiefeninformation von Bildpunkten bei der Bestimmung der Stützstellen zusätzliche Stützstellen mit semantischer Bedeutung der zusätzlichen Tiefeninformation gebildet werden, die im Rahmen der Triangularisierung verwendet werden können. Durch die mit der neuen Semantik gekoppelten neuen Stützstellen wird eine verbesserte Visualisierung mittels Texture-Mapping-Verfahren ermöglicht.

Die entsprechenden Vorteile weist ebenfalls die Anordnung zur Durchführung des Verfahrens auf, bei der eine Prozessoreinheit vorgesehen ist zur Durchführung der einzelnen Verfahrensschritte.

Vorteilhafte Weiterbildungen der Erfindung ergeben sich aus den abhängigen Ansprüchen.

In einer Weiterbildung ist es zur Einsparung erforderlicher Rechenzeit zur Durchführung des Verfahrens vorteilhaft, eine Approximationskurve zu der Kontur zu ermitteln und die Stützstellen derart zu bestimmen, daß sie auf der Approximationskurve liegen.

Eine weitere Einsparung benötigter Rechenzeit wird dadurch erreicht, daß die Approximationskurve durch eine Polygonalisierung der Kontur ermittelt wird.

Auch ist es zur weiteren Einsparung benötigter Rechenzeit vorteilhaft, die Bildung der Polygone im 2-dimensionalen Raum vorzunehmen.

Ferner ist es in einer Weiterbildung des Verfahrens vorteilhaft als Polygone Dreiecke zu verwenden, da diese Art der Polygone sehr leicht berechenbar ist und dadurch erhebliche Rechenzeit eingespart wird.

Ferner hat es sich als vorteilhaft erwiesen, die Bildung der Polygone iterativ durchzuführen, wobei anhand eines vorgebbaren Qualitätskriteriums bestimmt wird, ob weitere Polygone ermittelt werden. Auf diese Weise wird die erreichbare Qualität bei der Visualisierung des jeweiligen Bildobjekts erheblich verbessert.

Eine weitere Verbesserung der Visualisierung wird dadurch erreicht, daß als Maß zur Bildung weiterer Polygone die Krümmung der zu einem Bildobjekt korrespondierenden Tiefeninformation verwendet wird. Dabei werden vorzugsweise in Bereichen von starken Krümmungswerten kleine Maximalflächen und von geringen Krümmungswerten vorzugsweise große Maximalflächen festgelegt. Auf diese Weise werden weitgehend ebene Bereiche der vorgegebenen Tiefenregion in dem Bildobjekt durch wenige große Dreiecke, und stark gekrümmte Bereiche durch viele kleine Dreiecke, allgemein durch viele kleine Polygone, approximiert.

### 4. Kurzbeschreibung der Figuren

In den Figuren ist ein Ausführungsbeispiel der Erfindung dargestellt, welches im weiteren näher erläutert wird.

### Es zeigen

- Fig. 1: ein Ablaufdiagramm, in dem die einzelnen Verfahrensschritte des Verfahrens dargestellt sind;
- Fig. 2: eine übliche Anordnung zur Aufnahme und Verarbeitung von Bildern;
- Fig. 3a und 3b: beispielhaft ein Bild einer Person (Fig. 3a) und das dazu korrespondierende Tiefenbild (Fig. 3b) ;
- Fig. 4: eine Skizze der Bildpunkte der Kontur der Person, d.h. dem Bildobjekt aus Fig. 3a;
- Fig. 5: eine Skizze einer polygonalisierten Objektkante aus Fig. 5 in dem 3-dimensionalen Raum, d.h. unter Berücksichtigung der Tiefeninformation;
- Fig. 6: eine Skizze, anhand der beispielhaft eine Polygonalisierung dargestellt ist;
- Fig. 7: ein zu der Fig. 6 korrespondierender Segmentierungsbaum;
- Fig. 8: beispielhaft das Ergebnis einer Triangularisierung nach dem bekannten Verfahren aus dem Dokument [4] ;
- Fig. 9: ein Gradientenbild des Tiefenbildes aus Fig. 3b;
- Fig. 10: beispielhaft das Ergebnis einer Triangularisierung nach dem erfindungsgemäßen Verfahren mit einigen Weiterbildungen.

### 5. Figurenbeschreibung

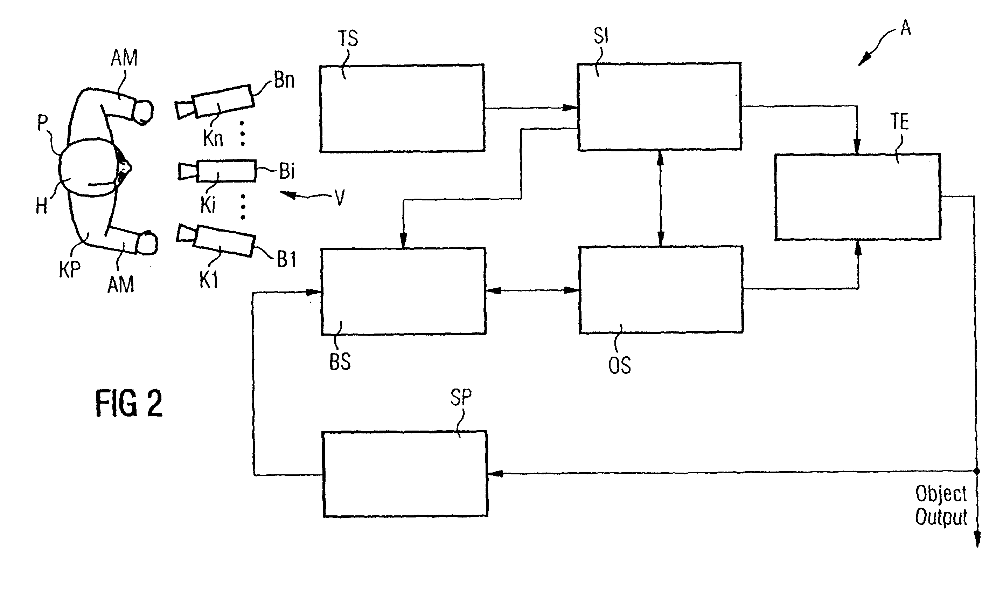

Fig. 2 zeigt eine Anordnung zur Aufnahme und Verarbeitung von Bildern. Eine Mehrzahl von Kameras Ki (i=1..n) nimmt eine Szene aus verschiedenen Perspektiven aus auf. In der Szene ist ein Bildobjekt BO, beispielsweise eine Person P enthalten, die von den Kameras Ki erfaßt wird.

Eine Anordnung A zur Bildanalyse enthält ein Mittel zur Tiefenschätzung TS. In dem Mittel zur Tiefenschätzung TS werden vorzugsweise zusätzlich Vorverarbeitungsschritte, beispielsweise Kamerakalibrierung, Korrektur von Linsenverzerrungen der Kameras Ki, Maßnahmen zur Bildverbesserung und Disparitätsschätzung durchgeführt. Weiterhin wird in dem Mittel zur Tiefenschätzung TS die für eine im weiteren beschriebene Erstellung von 3-dimensionalen Modellen von Bildobjekten, die in den Bildern enthalten sind,Tiefeninformation ermittelt.

Die von den Kameras Ki ermittelten Bilder Bi werden der Anordnung A über eine Verbindung V, beispielsweise eine Übertragungsleitung, zugeführt.

Zur Ermittlung der Tiefeninformation, d.h. zur Ermittlung eines im weiteren näher erläuterten Tiefenbildes wird aus den aufgenommenen Bildern Bi die Distanz zwischen dem Raumpunkt einer Szene und der Kamera Ki ermittelt. Dies erfolgt beispielsweise nach der sog. bekannten Disparitäts-/Tiefenschätzung aus verschiedenen Kameraansichten. Ein mögliches Verfahren zur Disparitäts-/Tiefenschätzung ist in [1] beschrieben. Dieses Verfahren weist gegenüber anderen alternativen Verfahren den Vorteil auf, daß durch das Verfahren sowohl Texturinformation als auch Tiefeninformation für das Bildobjekt BO ermittelt wird.

Unter einem Tiefenbild TB ist im Rahmen dieses Dokuments ein digitalisiertes Bild mit Bildpunkten zu verstehen, wobei den Bildpunkten jeweils eine Tiefeninformation zugeordnet ist, mit der die Entfernung des jeweiligen Objektpunktes von dem Brennpunkt der Linse angegeben wird. Unter einem dichten Tiefenbild TB ist ein Tiefenbild TB zu verstehen, bei dem für jeden Punkt einer gegebenen Region ein Tiefenwert definiert ist.

In dem Fall, daß ein noch nicht aufgenommenes Bildobjekt BO in einer Szene "neu aufgenommen" wird, beispielsweise weil es in vorangegangenen Bildern von anderen Bildobjekten BO bedeckt war, muß für das jeweils neue Bildobjekt BO ein 3-dimensionales Modell des Bildobjekts BO oder eines Teils des Bildobjekts BO ermittelt werden. Dies wird beispielsweise dadurch erreicht, daß durch Bildung von Differenzbildern neue Bildobjekte BO, die in vorangegangenen Bildern noch nicht enthalten waren, ermittelt werden. Diese neue Objekte BO können somit in dem Tiefenbild TB segmentiert werden.

In einem Mittel zur 3-dimensionalen Formeninitialisierung SI werden für jedes neue 3-dimensionale Modell für ein Bildobjekt 3-dimensionale Formparameter des Modells initialisiert. Dies wird erreicht durch eine im weiteren näher erläuterte Triangularisierung des Bildobjekts BO.

Ein Bildobjekt BO kann mehrere sich auf unterschiedliche Weise bewegende aber trotzdem miteinander verbundene Objekte enthalten, beispielsweise enthält die Person P Arme AM, Körper KP und Kopf H. Um diese unterschiedlichen Objekte zu ermitteln wird in einem Mittel zur 3-dimensionalen Bewegungsschätzung BS und einem Mittel zur Objektunterteilung und Aktualisierung OS der 3-dimensionalen Formparameter eine Bewegungsschätzung für das 3-dimensionale Bildobjekt durchgeführt und anhand der Bewegungsschätzung das Bildobjekt BO eventuell in mehrere kleinere Bildobjekte unterteilt und die Formen der entsprechenden kleineren Bildobjekte aktualisiert.

In dem Mittel zur Objektunterteilung OS werden basierend auf der 3-dimensionalen Bewegungsschätzung Informationen über Diskontinuitäten in der Bewegung des Bildobjekts ermittelt. An diesen Diskontinuitäten wird eine Unterteilung des Bildobjekts in sich unterschiedlich bewegende 3-D-Bildobjekte durchgeführt. Vorzugsweise werden Tiefeninformation und Luminanzinformation, die in den Bildern Bi enthalten ist, im Rahmen der Objektunterteilung berücksichtigt - insbesondere zur Ermittlung der Objektkanten der einzelnen Bildobjektkomponenten des Bildobjekts, die sich unterschiedlich bewegen.

Die Bilddaten werden in einem Bildspeicher SP gespeichert.

In einem Mittel zur Texturschätzung TE werden ausgehend von den aufgenommenen Bildern Bi die Texturparameter für das jeweilige Bildobjekt ermittelt.

Die in dieser Anordnung ermittelten Objektdaten werden codiert und beispielsweise einer zweiten Anordnung A zur Decodierung übertragen.

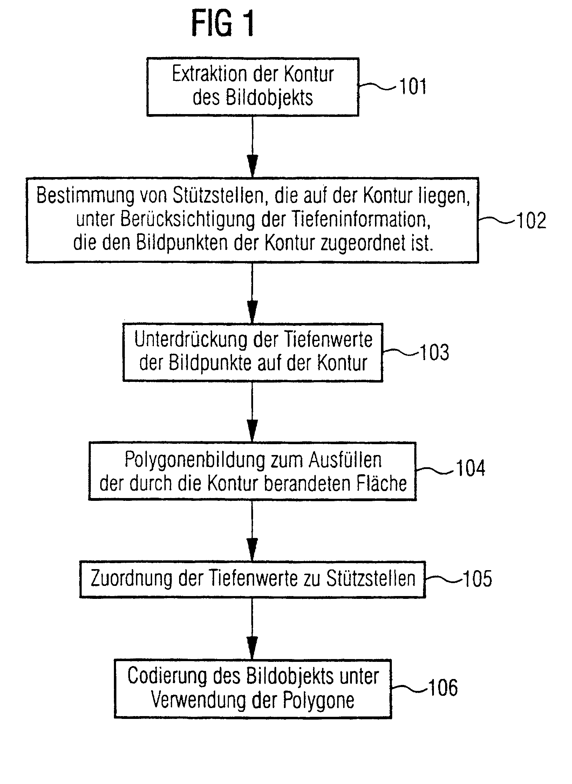

In Fig. 1 ist das Verfahren in seinen Verfahrensschritten mit einigen Weiterbildungen dargestellt.

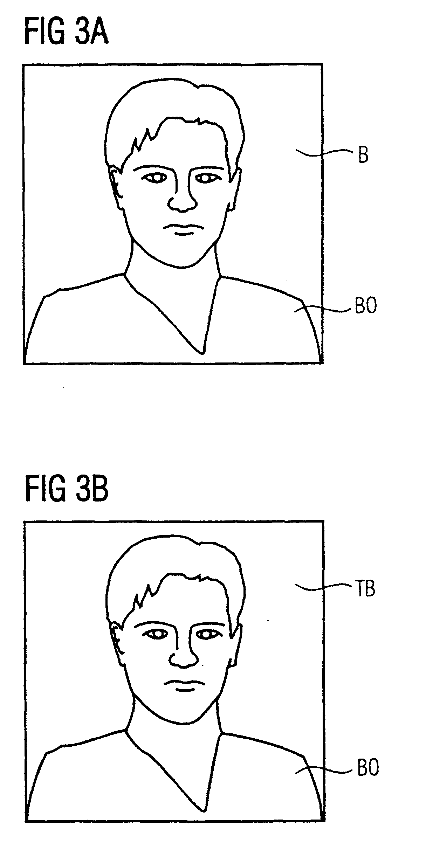

Als Ausgangspunkt zur Ermittlung eines 3-dimensionalen Modells für ein Bildobjekt BO dient ein Bild B einer natürlichen Szene, wie es beispielsweise in Fig. 3a dargestellt ist. In Fig. 3b ist beispielhaft das zu Fig. 3a korrespondierende Tiefenbild TB dargestellt.

Soll nun für eine bestimmte Region, d.h. für ein Bildobjekt BO in dem Bild B ein Dreiecksnetz generiert werden, so wird in einem ersten Schritt 101 für das Bildobjekt BO eine Objektkante, die im weiteren als Kontur KO bezeichnet wird, vorzugsweise im Tiefenbild TB extrahiert. Hierzu wird ein beispielsweise aus [2] bekanntes Konturverfolgungsverfahren eingesetzt.

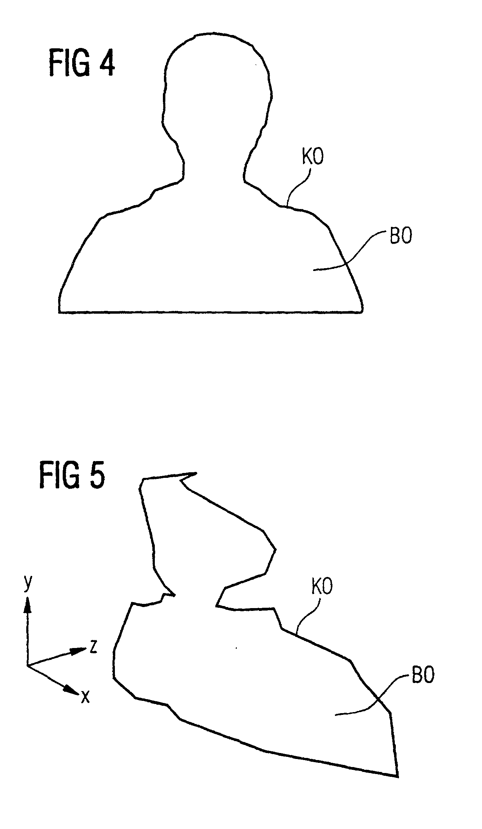

In Fig. 4 ist die Kontur KO des Bildobjekts BO im 2-dimensionalen Raum dargestellt.

Im Vergleich dazu zeigt Fig. 5 eine schon polygonalisierte Kontur in dem 3-dimensionalen Raum.

Durch Hinzunahme der jeweiligen Tiefenwerte, die den einzelnen Bildpunkten des Tiefenbildes zugeordnet sind zu den Koordinaten der Bildpunkte erhält man eine Kontur KO im Raum. Die Kontur im Raum wird im weiteren als 3-dimensionale Kontur KO bezeichnet.

Die 3-dimensionale Kontur wird durch einen Polygonzug im 3-dimensionalen Raum approximiert.

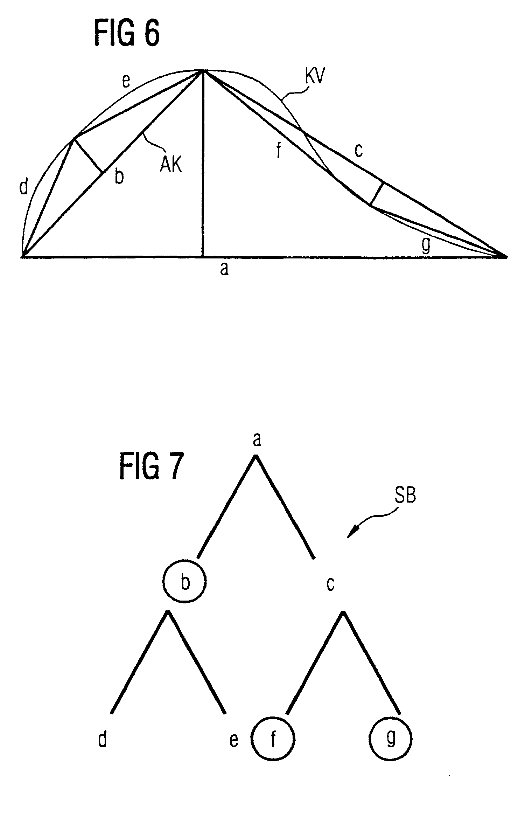

Ein hierfür geeignetes Verfahren ist aus dem Dokument [7] bekannt. Um eine 3-dimensionale Kurve, d.h. die 3-dimensionale Kontur KO, die n Bildpunkte enthält in eine Mehrzahl gerader Linien zu approximieren wird ein binärer Baum gebildet, der alle rekursiven Unterteilungen der 3-dimensionalen Kontur KO in gerade Linien enthält. Dieser binäre Baum wird dann vollständig durchsucht, um die beste Representation der 3-dimensionalen Kontur KO durch einen Polygonzug zu erhalten. Nach einer initialen Approximation der kompletten Liste aller Bildpunkte der 3-dimensionalen Kontur durch eine gerade Linie wird die Liste in zwei Geradenstücke aufgeteilt, und zwar an dem Punkt der max. Abweichung zwischen der tatsächlichen und der approximierten Kurve. Dieser Prozeß der Approximation und Aufteilung der Geradenstücke wird rekursiv solange wiederholt, bis jeweils eine Liste der Bildpunkte lediglich zwei Bildpunkte enthält. Jede Approximation wird in einer Datenstruktur gespeichert. Sie enthält jeweils Referenzen zu den zwei Approximationen, in denen die ursprüngliche Approximation aufgeteilt wurde. Das Ergebnis dieses rekursiven Prozesses ist ein Segmentierungsbaum SB (vgl. Fig. 7). In dem Segmentierungsbaum SB ist in jeder Stufe die gesamte 3-dimensionale Kontur KO mit steigendem Feinheitsgrad der Segmentierung beschrieben. Jedem Geradenstück in dem Segmentierungsbaum SB wird ein Signifikanzwert zugeordnet. Der Signifikanzwert wird beispielsweise ermittelt durch den Quotienten der Länge des Geradenstücks und der max. Abweichung der Approximation von der zu approximierenden Kurve. In dem Segmentierungsbaum SB wird die Menge der besten Geradenstücke bezüglich des Signifikanzwertes ermittelt. Die Untersuchung wird begonnen bei den sog. Blättern des Segmentierungsbaumes SB, d.h. denjenigen Elementen, die nicht mehr in weitere Geradenstücke aufgeteilt werden. Ein Geradenstück wird beibehalten, wenn der Signifikanzwert des jeweiligen Geradenstücks größer ist als der Signifikanzwert der sich in dem Segmentierungsbaum SB unterhalb befindendlichen Geradenstücke, sonst wird das Geradenstück ersetzt durch das jeweilige Geradenstück, welches einen höheren Signifikanzwert aufweist. Nach Untersuchung des gesamten Segmentierungsbaums SB wird die optimale Segmentierung durch die übriggebliebenden Geradenstücke beschrieben.

In Fig. 6 sind eine Kurve KV und ein vollständiger Satz von Geradenstücken zur Approximation der Kurve KV und die Punkte der max. Abweichung der Geradenstücke von der zu approximierenden Kurve KV dargestellt. Aus diesem Satz der Geradenstücke wird eine Approximationskurve AK gebildet. In Fig. 7 ist der zu Fig. 6 korrespondierende Segmentierungsbaum SB dargestellt, wobei mit a, b, c, d, e, f, g jeweils die Geradenstücke eindeutig bezeichnet werden. Mit einem umkreisten Symbol wird das jeweilige Geradenstück bezeichnet mit dem jeweils maximalen Signifikanzwert. Dies bedeutet in diesem Fall beispielsweise, daß das Geradenstück b einen größeren Signifikanzwert aufweist als sowohl das Geradenstück d und e. Ferner bedeutet dies, daß entweder das Geradenstück f oder das Geradenstück g einen höheren Signifikanzwert aufweist als das Geradenstück c. Weiterhin ist der Fig. 7 zu entnehmen, daß entweder das Geradenstück b, das Geradenstück f oder das Geradenstück g einen größeren Signifikanzwert aufweist als das Geradenstück a. Für diesen Beispielsfall ergibt sich also die Approximationskurve AK aus der Zusammensetzung der Geradenstücke b, f, g.

Durch die Approximationskurve AK ergeben sich Stützstellen, die auf der Approximationskurve liegen, d.h. es werden in einem zweiten Verfahrensschritt 102 Stützstellen bestimmt, die auf der Kontur KO liegen. Der Vorteil der Polygonalisierung unter Berücksichtigung der Tiefeninformation, d.h. bei der Bestimmung der Stützstellen unter Berücksichtigung von Tiefeninformation ist insbesondere darin zu sehen, daß die Approximationskurve Ak zusätzliche Stützstellen gegenüber einer Polygonalisierung lediglich im 2-dimensionalen Raum aufweist, mit denen reine Tiefenänderungen markiert werden, die eine erhebliche Bedeutung gewinnen für eine qualitativ hochwertige Dreiecksnetzbildung für die Visualisierung der 3-dimensionalen Bildobjekte BO.

In einem dritten Schritt 103 wird durch Unterdrückung der Tiefenwerte der Stützstellen der Approximationskurve AK diese nun wieder in dem 2-dimensionalen Raum überführt.

Für die auf diese Weise ermittelte Approximationskurve AK werden nun für die Fläche, die durch die Approximationskurve AK begrenzt wird, unter Berücksichtigung der Stützstellen Polygone gebildet, mit denen die mit der Kontur KO berandete Fläche zumindest näherungsweise ausgefüllt wird 104. Dies erfolgt beispielsweise mittels des aus dem Dokument [4] bekannten Verfahrens der Triangularisierung. Das in [4] beschriebene Verfahren ist lediglich dahingehend abzuändern, daß eine dritte Dimension bei der Triangularisierung mit berücksichtigt wird.

Als Qualitätskriterium, ob ein Dreieck weiter in zwei Dreiecke unterteilt werden soll oder nicht, wird vorzugsweise ein zusätzliches Kriterium in Form der Krümmung zu einem Bildobjekt korrespondierenden Tiefeninformation verwendet. Dabei werden in Bereichen von starken Krümmungswerten kleine Maximalflächen der verwendeten Dreiecke und von geringen Krümmungswerten große Maximalflächen der verwendeten Dreiekke festgelegt. Zur Bestimmung der Krümmungen im Tiefenbild TB kann das Verfahren aus [3] oder auch ein beliebiger 3-dimensionaler Kantenfilter, welcher in [5] beschrieben ist, verwendet werden.

Auf diese Weise werden weitgehend ebene Bereiche der vorgegebenen Tiefenregion durch wenige große Dreiecke und stark gekrümmte durch viele kleine Dreiecke approximiert.

Ferner wird in einem weiteren Schritt 105 jedem Eckpunkt des Dreiecksnetzes wieder der zugehörige Tiefenwert aus dem Tiefenbild TB zugewiesen und so das Netz unter Beibehaltung der Netztopologie wieder in den 3-dimensionalen Raum überführt.

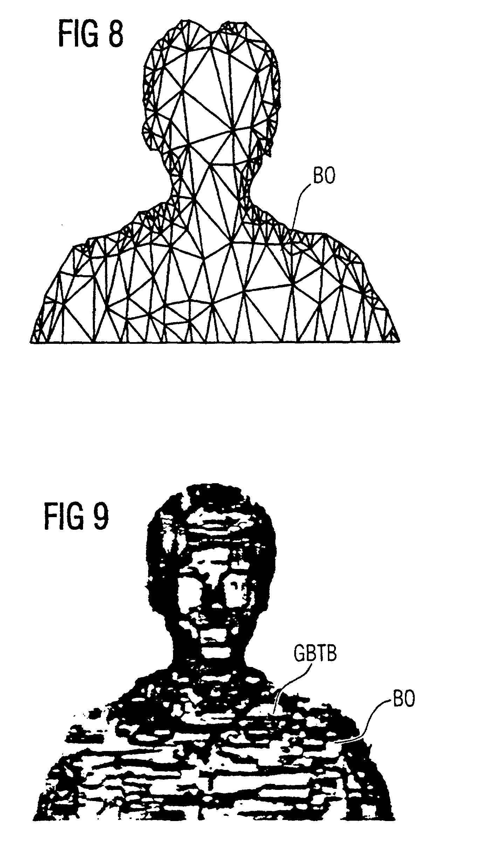

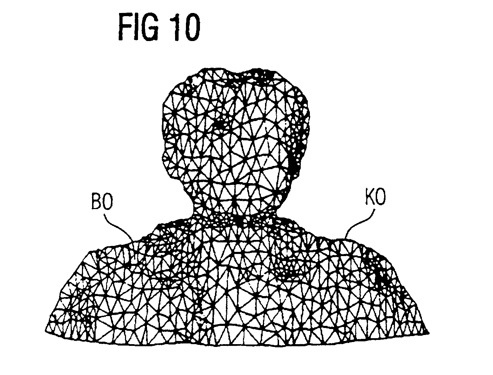

Zum besseren Vergleich der Ergebnisse, welche mit dem bekannten Verfahren aus [4] im 2-dimensionalen erreicht werden kann, wie es in Fig. 8 dargestellt ist, ist in Fig. 10 eine Triangularisierung nach dem erfindungsgemäßen Verfahren dargestellt, welches als Qualitätskriterium die Krümmung des Tiefenbildes TB, und somit das in Fig. 9 dargestellte Gradientenbild GBTB des Tiefenbildes TB aus Fig. 3b verwendet. Es ist deutlich eine verbesserte Triangularisierung an für die Visualisierung wichtigen Bereichen erkennbar, an denen eine Tiefenänderung des Objekts BO ermittelt wurde.

In einem letzten Schritt 106 wird das Bildobjekt BO unter Verwendung der Polygone, d.h. der Dreiecke codiert.

Die auf diese Weise generierten Netze eignen sich für die computergraphische Visualisierung mittels Texture-Mapping-Verfahren sehr gut, da
- die Zuweisung der Textur zu den jeweiligen Dreiecken sehr einfach ist (das 2-dimensionale Dreiecksnetz braucht nur auf das Abbild der natürlichen Szene gelegt werden) ;
- kein Dreieck generiert wird, dem keine Textur zugewiesen werden kann, da nur sichtbare Dreiecke generiert werden;
- durch die Qualitätskriterien, die bei dem Verfahren zur Triangularisierung nach [4] sehr spitze und unnötig kleine Dreiecke weitgehend vermieden werden.

Im weiteren werden einige Alternativen zu dem oben ausgeführten Ausführungsbeispiel erläutert.

Die Form der verwendeten Polygone ist nicht auf Dreiecke beschränkt. Allgemein können beliebige Polygone zum Auffüllen der von der Approximationskurve AK begrenzten Objektfläche verwendet werden.

Es ist ferner nicht erforderlich, die Approximationskurve AK zu verwenden, sondern es ist ebenso möglich, die Kontur KO selbst mit Polygonen aufzufüllen und auf der Kontur KO die Stützstellen zu ermitteln unter Berücksichtigung der Tiefeninformation der Bildpunkte der Kontur KO.

Auch ist die Art der Ermittlung der Tiefeninformation nicht auf die Disparitäts-/Tiefenschätzung beschränkt. Alternative Verfahren zur Gewinnung der erforderlichen Tiefeninformation sind beispielsweise strukturiertes Licht, Entfernungsleser, etc. Eine Übersicht über verschiedene Möglichkeiten zur Ermittlung der Tiefeninformation ist aus dem Dokument [1] bekannt. Die Anordnung zur Durchführung des Verfahrens weist jeweils Mittel auf, die derart ausgestaltet sind, daß die einzelnen Verfahrensschritte durchgeführt werden.

Anschaulich kann die Erfindung darin betrachtet werden, daß bei der Ermittlung von Stützstellen für die Triangularisierung eines Bildobjekts Tiefeninformation von Bildpunkten des Bildes berücksichtigt wird, wodurch zusätzliche, mit für die computergraphische Visualisierung bedeutende semantische Information berücksichtigt wird.

Im Rahmen dieses Dokuments wurden folgende Veröffentlichungen zitiert:
[1] Y. Shirai, Three-Dimensional Computer Vision, Springer,1. Auflage, ISBN 3-540-15119-2, S. 122-164, 1987
[2] R. Klette und P. Zamperoni, Handbuch der Operatoren für die Bildverarbeitung, Vieweg, 1. Auflage ISBN 3-528-06431-5, S. 254-263, 1992
[3] P. Haberäcker, Digitale Bildverarbeitung, 3. Auflage, Hansa, ISBN 3-446-15644-5, S. 137, 1989
[4] J. R. Shewchuk, Triangle: Engineering a 2D Quality Mesh Generator and Delaunay Triangulator, School of Computer Science, Carnegie Mellon University, Pittsburgh, PA 15213, URL=http://www.cs.cmu.edu/@quake/ trepaper/triangle0.html
[5] Y. Shirai, Three-Dimensional Computer Vision, Springer,1. Auflage, ISBN 3-540-15119-2, S. 166-174, 1987
[6] M. Bern und D. Eppstein, Mesh Generation and Optimal Triangulation, in Computing in Euclidean Geometry, 2nd ed. D.-Z. Du und F.K. Huang ,World Scientific, S. 47-123, 1995
[7] P. Rosin und G. West, Nonparametric Segmentation of Curves into Various Representations, IEEE Trans. on Pattern Analysis and Machine Intelligence, vol. 17, no. 12, S. 1140 -1153, Dec. 1995
[8] T. Akimoto et al, Automatic Creation of 3D Facial Models, IEEE Computer Graphics & Applications, September 1993, S. 16 - 22
[9] M. Hall and J. Warren, Adaptive Polygonalization of Implicitly Defined Surfaces, IEEE Computer Graphics & Applications, November 1990, S. 33 - 42
[10] X. Sheng and I. Meier, Generating Topological Structures for Surface Models, IEEE Computer Graphics & Applications, November 1995, S. 35 - 41
[11] US 5 465 323
[12] Malassiotis S. et al., "Coding of Video-Conference Stereo Image Sequences Using 3D Models", Signal Processing. Image Communication, Bd. 9, Nr. 2, Januar 1997, S. 125 - 135

## Patentansprüche

1. Verfahren zur Codierung eines digitalisierten Bildes mit mindestens einem Bildobjekt mit einer beliebigen Anzahl von Bildpunkten,
- bei dem die Kontur des Bildobjekts ermittelt wird,
- bei dem Stützstellen bestimmt werden, die auf der Kontur liegen,
- bei dem bei der Bestimmung der Stützstellen Tiefeninformation von Bildpunkten des Bildes berücksichtigt wird,
- bei dem unter Berücksichtigung der Stützstellen Polygone gebildet werden, mit denen die mit der Kontur berandete Fläche zumindest näherungsweise ausgefüllt wird, und
- bei dem das Bildobjekt unter Verwendung der Polygone codiert wird.

2. Verfahren nach Anspruch 1,
- bei dem eine Approximationskurve der Kontur ermittelt wird, und
- bei dem die Stützstellen auf der Approximationskurve liegen.

3. Verfahren nach Anspruch 2,
bei dem die Approximationskurve durch eine Polygonalisierung der Kontur ermittelt wird.

4. Verfahren nach einem der vorangegangenen Ansprüche,
bei dem die Konturermittlung des Bildobjekts unter Berücksichtigung von Tiefeninformation der Bildpunkte erfolgt.

5. Verfahren nach einem der vorangegangenen Ansprüche,
bei dem die Stützstellen sich ergeben aus Anfangsvektoren bzw. Endvektoren von Teilen der Approximationskurve.

6. Verfahren nach einem der vorangegangenen Ansprüche,
bei dem die Bildung der Polygone im zweidimensionalen Raum erfolgt.

7. Verfahren nach einem der vorangegangenen Ansprüche,
bei dem als Polygone Dreiecke verwendet werden.

8. Verfahren nach einem der vorangegangenen Ansprüche,
bei dem die Bildung der Polygone in einem iterativen Verfahren erfolgt, bei dem anhand eines vorgebbaren Qualitätskriteriums bestimmt wird, ob weitere Polygone ermittelt werden oder nicht.

9. Verfahren nach Anspruch 8,
bei dem als Qualitätskriterium die Flächengröße der Polygone und/oder Innenwinkel der Polygone verwendet wird.

10. Verfahren nach einem der vorangegangenen Ansprüche,
bei dem als Maß zur Bildung weiterer Polygone die Krümmung der zu einem Bildobjekt korrespondierenden Tiefeninformation verwendet wird.

11. Verfahren nach Anspruch 10,
- bei dem ein Tiefenbild ermittelt wird, und
- bei dem die Krümmung durch Bildung des Gradienten des Tiefenbildes ermittelt wird.

12. Verfahren nach Anspruch 10,
- bei dem ein Tiefenbild ermittelt wird, und
- bei dem die Krümmung durch Verwendung eines dreidimensionalen Kantenfilters ermittelt wird.

13. Anordnung zur Codierung eines digitalisierten Bildes mit mindestens einem Bildobjekt mit einer beliebigen Anzahl von Bildpunkten,
mit einer Prozessoreinheit, die derart eingerichtet ist, daß
- die Kontur des Bildobjekts ermittelt wird,
- Stützstellen bestimmt werden, die auf der Kontur liegen,
- bei der Bestimmung der Stützstellen Tiefeninformation von Bildpunkten des Bildes berücksichtigt wird,
- unter Berücksichtigung der Stützstellen Polygone gebildet werden, mit denen die mit der Kontur berandete Fläche zumindest näherungsweise ausgefüllt wird, und
- das Bildobjekt unter Verwendung der Polygone codiert wird.

14. Anordnung nach Anspruch 13,
bei der die Prozessoreinheit derart eingerichtet ist, daß
- eine Approximationskurve der Kontur ermittelt wird, und
- die Stützstellen auf der Approximationskurve liegen.

15. Anordnung nach Anspruch 14,
bei der die Prozessoreinheit derart eingerichtet ist, daß die Approximationskurve durch eine Polygonalisierung der Kontur ermittelt wird.

16. Anordnung nach einem der Ansprüche 13 bis 15,
bei der die Prozessoreinheit derart eingerichtet ist, daß die Konturermittlung des Bildobjekts unter Berücksichtigung von Tiefeninformation der Bildpunkte erfolgt.

17. Anordnung nach einem der Ansprüche 13 bis 16,
bei der die Prozessoreinheit derart eingerichtet ist, daß die Stützstellen sich ergeben aus Anfangsvektoren bzw. Endvektoren von Teilen der Approximationskurve.

18. Anordnung nach einem der Ansprüche 13 bis 17,
bei der die Prozessoreinheit derart eingerichtet ist, daß die Bildung der Polygone im zweidimensionalen Raum erfolgt.

19. Anordnung nach einem der Ansprüche 13 bis 18,
bei der die Prozessoreinheit derart eingerichtet ist, daß als Polygone Dreiecke verwendet werden.

20. Anordnung nach einem der Ansprüche 13 bis 19,
bei der die Prozessoreinheit derart eingerichtet ist, daß
- die Bildung der Polygone in einem iterativen Verfahren erfolgt, und
- anhand eines vorgebbaren Qualitätskriteriums bestimmt wird, ob weitere Polygone ermittelt werden oder nicht.

21. Anordnung nach Anspruch 20,
bei der die Prozessoreinheit derart eingerichtet ist, daß als Qualitätskriterium die Flächengröße der Polygone und/oder Innenwinkel der Polygone verwendet wird.

22. Anordnung nach einem der Ansprüche 13 bis 21,
bei der die Prozessoreinheit derart eingerichtet ist, daß als Maß zur Bildung weiterer Polygone die Krümmung der zu einem Bildobjekt korrespondierenden Tiefeninformation verwendet wird.

23. Anordnung nach Anspruch 22,
bei der die Prozessoreinheit derart eingerichtet ist, daß
- ein Tiefenbild ermittelt wird, und
- die Krümmung durch Bildung des Gradienten des Tiefenbildes ermittelt wird.

24. Anordnung nach Anspruch 22,
bei der die Prozessoreinheit derart eingerichtet ist, daß
- ein Tiefenbild ermittelt wird, und
- die Krümmung durch Verwendung eines dreidimensionalen Kantenfilters ermittelt wird.

## Claims

1. Method for coding a digitized image with at least one image object with an arbitrary number of pixels,
- in which the contour of the image object is determined,
- in which interpolation points lying on the contour are determined,
- in which depth information of pixels of the image is taken into account in the determination of the interpolation points,
- in which polygons which at least approximately fill the area bordered by the contour are formed taking the interpolation points into account, and
- in which the image object is coded using the polygons.

2. Method according to Claim 1,
- in which an approximation curve of the contour is determined, and
- in which the interpolation points lie on the approximation curve.

3. Method according to Claim 2,
in which the approximation curve is determined by polygonalization of the contour.

4. Method according to one of the preceding claims,
in which the determination of the contour of the image object is effected taking account of depth information of the pixels.

5. Method according to one of the preceding claims,
in which the interpolation points result from start vectors and end vectors, respectively, of parts of the approximation curve.

6. Method according to one of the preceding claims,
in which the polygons are formed in two-dimensional space.

7. Method according to one of the preceding claims,
in which triangles are used as polygons.

8. Method according to one of the preceding claims,
in which the polygons are formed using an iterative method in which a predeterminable quality criterion is used to determine whether or not further polygons will be determined.

9. Method according to Claim 8,
in which the size of the area of the polygons and/or internal angles of the polygons are used as the quality criterion.

10. Method according to one of the preceding claims,
in which the curvature of the depth information corresponding to an image object is used as a measure for forming further polygons.

11. Method according to Claim 10,
- in which a depth image is determined, and
- in which the curvature is determined by forming the gradient of the depth image.

12. Method according to Claim 10,
- in which a depth image is determined, and
- in which the curvature is determined by using a three-dimensional cut-off filter.

13. Arrangement for coding a digitized image with at least one image object with an arbitrary number of pixels,
having a processor unit which is set up in such a way that
- the contour of the image object is determined,
- interpolation points lying on the contour are determined,
- depth information of pixels of the image is taken into account in the determination of the interpolation points,
- polygons which at least approximately fill the area bordered by the contour are formed taking the interpolation points into account, and
- the image object is coded using the polygons.

14. Arrangement according to Claim 13,
in which the processor unit is set up in such a way that
- an approximation curve of the contour is determined, and
- the interpolation points lie on the approximation curve.

15. Arrangement according to Claim 14,
in which the processor unit is set up in such a way that the approximation curve is determined by polygonaliztion of the contour.

16. Arrangement according to one of Claims 13 to 15,
in which the processor unit is set up in such a way that the determination of the contour of the image object is effected taking account of depth information of the pixels.

17. Arrangement according to one of Claims 13 to 16,
in which the processor unit is set up in such a way that the interpolation points result from start vectors and end vectors, respectively, of parts of the approximation curve.

18. Arrangement according to one of Claims 13 to 17,
in which the processor unit is set up in such a way that the polygons are formed in two-dimensional space.

19. Arrangement according to one of Claims 13 to 18,
in which the processor unit is set up in such a way that triangles are used as polygons.

20. Arrangement according to one of Claims 13 to 19,
in which the processor unit is set up in such a way that
- the polygons are formed using an iterative method, and
- a predeterminable quality criterion is used to determine whether or not further polygons will be determined.

21. Arrangement according to Claim 20,
in which the processor unit is set up in such a way that the size of the area of the polygons and/or internal angles of the polygons are used as the quality criterion.

22. Arrangement according to one of Claims 13 to 21,
in which the processor unit is set up in such a way that the curvature of the depth information corresponding to an image object is used as a measure for forming further polygons.

23. Arrangement according to Claim 22,
in which the processor unit is set up in such a way that
- a depth image is determined, and
- the curvature is determined by forming the gradient of the depth image.

24. Arrangement according to Claim 22,
in which the processor unit is set up in such a way that
- a depth image is determined, and
- the curvature is determined by using a three-dimensional cut-off filter.

## Revendications

1. Procédé de codage d'une image numérisée contenant au moins un objet avec un nombre quelconque de points,
- dans lequel on détermine le contour de l'objet de l'image,
- dans lequel on définit des points d'appui placés sur le contour,
- dans lequel, au moment de définir les points d'appui, on tient compte de l'information de profondeur de points de l'image,
- dans lequel, en tenant compte des points d'appui, on forme des polygones avec lesquels on remplit au moins approximativement la surface limitée par le contour, et
- dans lequel on code l'objet de l'image à l'aide des polygones.

2. Procédé selon la revendication 1,
- dans lequel on détermine une courbe d'approximation du contour, et
- dans lequel les points d'appui sont placés sur la courbe d'approximation.

3. Procédé selon la revendication 2, dans lequel on détermine la courbe d'approximation par une polygonalisation du contour.

4. Procédé selon l'une des revendications précédentes, dans lequel on détermine le contour de l'objet de l'image en tenant compte de l'information de profondeur des points de l'image.

5. Procédé selon l'une des revendications précédentes, dans lequel les points d'appui sont obtenus par des vecteurs d'origine resp. des vecteurs d'extrémité de segments de la courbe d'approximation.

6. Procédé selon l'une des revendications précédentes, dans lequel les polygones sont formés dans l'espace à deux dimensions.

7. Procédé selon l'une des revendications précédentes, dans lequel on utilise des triangles comme polygones.

8. Procédé selon l'une des revendications précédentes, dans lequel les polygones sont formés selon une méthode itérative consistant à déterminer à l'aide d'un critère de qualité prédéfinissable si d'autres polygones sont définis ou pas.

9. Procédé selon la revendication 8, dans lequel on utilise comme critère de qualité la dimension de la surface des polygones et/ou des angles internes des polygones.

10. Procédé selon l'une des revendications précédentes, dans lequel on utilise comme grandeur pour la formation d'autres polygones la partie courbe de l'information de profondeur correspondant à un objet image.

11. Procédé selon la revendication 10,
- dans lequel on détermine une image de profondeur, et
- dans lequel on détermine la partie courbe par formation du gradient de l'image de profondeur.

12. Procédé selon la revendication 10,
- dans lequel on détermine une image de profondeur, et
- dans lequel on détermine la partie courbe à l'aide d'un filtre à arêtes tridimensionnel.

13. Dispositif de codage d'une image numérisée contenant au moins un objet avec un nombre quelconque de points, comprenant un processeur configuré de manière
- à déterminer le contour de l'objet de l'image,
- à définir des points d'appui placés sur le contour,
- à tenir compte au moment de définir les points d'appui, de l'information de profondeur des points de l'image,
- à former des polygones en tenant compte des points d'appui, avec lesquels on remplit au moins approximativement la surface limitée par le contour, et
- à coder l'objet de l'image à l'aide des polygones.

14. Dispositif selon la revendication 13, dans lequel le processeur est configuré de manière
- à déterminer une courbe d'approximation du contour et
- à placer les points d'appui sur la courbe d'approximation.

15. Dispositif selon la revendication 14, dans lequel le processeur est configuré de manière à déterminer la courbe d'approximation par une polygonalisation du contour.

16. Dispositif selon l'une des revendications 13 à 15, dans lequel le processeur est configuré de manière à déterminer le contour de l'objet de l'image en tenant compte de l'information de profondeur des points de l'image.

17. Dispositif selon l'une des revendications 13 à 16, dans lequel le processeur est configuré de manière à obtenir les points d'appui par des vecteurs d'origine resp. des vecteurs d'extrémité de segments de la courbe d'approximation.

18. Dispositif selon l'une des revendications 13 à 17, dans lequel le processeur est configuré de manière à former les polygones dans l'espace à deux dimensions.

19. Dispositif selon l'une des revendications 13 à 18, dans lequel le processeur est configuré de manière à utiliser des triangles comme polygones.

20. Dispositif selon l'une des revendications 13 à 19, dans lequel le processeur est configuré de manière
- à former les polygones selon une méthode itérative, et
- à déterminer à l'aide d'un critère de qualité prédéfinissable si d'autres polygones sont définis ou pas.

21. Dispositif selon la revendication 20, dans lequel le processeur est configuré de manière à utiliser comme critère de qualité la dimension de la surface des polygones et/ou des angles internes des polygones.

22. Dispositif selon l'une des revendications 13 à 21, dans lequel le processeur est configuré de manière à utiliser comme grandeur pour la formation d'autres polygones la partie courbe de l'information de profondeur correspondant à un objet de l'image.

23. Dispositif selon la revendication 22, dans lequel le processeur est configuré de manière
- à déterminer une image de profondeur, et
- à déterminer la partie courbe par formation du gradient de l'image de profondeur.

24. Procédé selon la revendication 22, dans lequel le processeur est configuré de manière
- à déterminer une image de profondeur, et
- à déterminer la partie courbe à l'aide d'un filtre à arêtes tridimensionnel.
